# EUROPÄISCHE PATENTANMELDUNG

(11) **EP 4 573 880 A1**
(43) Veröffentlichungstag der Anmeldung: **25.06.2025**
(21) Anmeldenummer: 23219756.6
(22) Anmeldetag: 22.12.2023
(51) Int. Cl.: A01D 57/20, B65G 15/56

(54) **TRANSPORTBAND FÜR LANDMASCHINEN**

(71) Anmelder: Arnold Jäger Holding GmbH, 30559 Hannover (DE)
(72) Erfinder: Jäger, Sebastian, 30657 Hannover (DE); Baake, Nick, Lehrte/Immensen (DE)
(74) Vertreter: Bremer, Ulrich

(57) **Zusammenfassung**

Die Erfindung betrifft ein Transportband zum Transport von Fördergut in eine Förderrichtung (F), aufweisend:
- einen Mitnehmerbereich aus einem umlaufenden verstärkten Flächengebilde (4) mit einer Außenseite (4a) zur Auflage des Fördergutes;
- mindestens zwei um das Transportband umlaufende Zugbereiche, wobei das Flächengebilde (4) zwischen den Zugbereichen verläuft; und
- mehrere Mitnehmerleisten (12), die sich an der Außenseite (4a) des Flächengebildes (4) in Querrichtung (Q) erstrecken und mit dem Flächengebilde (4) verbunden sind.

Erfindungsgemäß ist vorgesehen, dass mindestens eine genähte Verbindung (20) ausgebildet ist
-- zwischen mindestens einer der Mitnehmerleisten (12) und dem Flächengebilde (4), und/oder
-- umlaufend um das Transportband in mindestens einem der Zugbereiche.

## Beschreibung

Die Erfindung betrifft ein Transportband gemäß dem Oberbegriff des Anspruches 1, insbesondere für landwirtschaftliche Maschinen.

Transportbänder kommen in vielen Landmaschinen zum Einsatz. Sie müssen möglichst robust ausgeführt sein, um unter den häufig rauen Arbeitsbedingungen eine große Standzeit zu erreichen. Insbesondere bei Schwadern, die bei hohen Zuggeschwindigkeiten arbeiten, sind die eingesetzten Transportbänder wegen der hohen Arbeitsgeschwindigkeit großen dynamischen Belastungen sowie auch großen Biegebeanspruchungen aufgrund der kleinen Umlenkradien auf den Antriebsrollen und Umlenkrollen, die normalerweise als Walzenrollen ausgeführt sind, ausgesetzt.

Beispielhaft sind solche Transportbänder in DE 10 2010 004 799 A1 oder EP 1 300 062 B1 beschrieben. Derartige Transportbänder weisen ein Flächengebilde und in Querrichtung ausgedehnte Mitnehmerleisten, die von einer Oberseite oder einer äußeren Seite des Flächengebildes bzw. des Transportbandes abstehen, auf. Die Mitnehmerleisten sind dabei auf der Oberseite oder der äußeren Seite des Flächengebildes aufgeklebt oder daran anvulkanisiert oder angegossen oder angeschweißt. Über die Mitnehmerleisten wird das transportierte Fördergut mitgenommen. Seitlich des Transportbandes sind ferner Zugbereiche in Form von Nockenriemen vorgesehen, über die das Transportband angetrieben wird. Die Nockenriemen weisen dazu von einer Unterseite bzw. einer inneren Seite abstehende Nocken auf, die auf den Antriebsrollen und Umlenkrollen aufliegen.

In EP 3 780 936 A4 und EP 2 140 752 B1 ist für einen reibschlüssigen, nockenlosen Antrieb des Transportbandes vorgesehen, auf der Unterseite oder der inneren Seite des Transportbandes in Förderrichtung bzw. in longitudinaler Richtung verlaufende Keilleisten anzubringen, die der Führung des reibschlüssig auf den Antriebsrollen und Umlenkrollen aufliegenden Transportbandes dienen.

Ergänzend ist gemäß den zitierten Druckschriften vorgesehen, innerhalb der in Querrichtung und auf der Oberseite oder der äußeren Seite des Transportbandes angeordneten Mitnehmerleisten einen Stab einzubringen, beispielsweise über einen durchgehenden Kanal oder ein durchgehendes Loch in dem Mitnehmerkörper, um die Festigkeit der Mitnehmerleiste zu erhöhen.

Nachteilig hierbei ist, dass das Befestigen der jeweiligen Komponente, d.h. des Nockenriemens im Zugbereich oder der Keilleiste und/oder der Mitnehmerleiste, an das vorgefertigte Flächengebilde beispielsweise durch Kleben, Vulkanisieren, Angießen, Schweißen sehr aufwändig ist und lange dauert. Zudem kann je nach Einsatzbereich eine Dauerhaltbarkeit der einzelnen Komponenten im Betrieb nicht sichergestellt werden. Außerdem sind Veränderungen in der Konstruktion des Transportbandes nur sehr aufwendig umzusetzen, da die speziellen Formen beispielsweise für die Vulkanisierung aufwändig an die neue Konstruktion anzupassen sind, was eine flexible und günstige Anpassung erschwert.

Aus EP 3 667 118 A1 ist weiterhin bekannt, die Enden eines Transportbandes zusammenzunähen, um ein endlos umlaufendes Transportband zu erhalten.

Aufgabe der vorliegenden Erfindung ist, ein Transportband zur Verfügung zu stellen, welches einfach und flexibel herzustellen ist und gleichzeitig sehr robust bzw. dauerhaltbar ausgeführt ist und daher lange Betriebszeiten gewährleistet.

Diese Aufgabe wird durch ein Transportband gemäß Anspruch 1 gelöst. Die Unteransprüche geben dabei bevorzugte Weiterbildungen an.

Erfindungsgemäß ist demnach vorgesehen, dass in einem gattungsgemäßen Transportband für Landmaschinen, insbesondere in einem Streckband zum Transport von Fördergut in eine Förderrichtung, eine genähte Verbindung ausgebildet ist und zwar
Variante 1: - in Querrichtung (im Wesentlichen senkrecht zur Förderrichtung) verlaufend zwischen mindestens einer Mitnehmerleiste und einem Flächengebilde in einem Mitnehmerbereich, um die mindestens eine Mitnehmerleiste mit dem Flächengebilde zu verbinden, und/oder
Variante 2: - vollständig umlaufend (in Umfangsrichtung) um das Transportband in mindestens einem Zugbereich, der der Aufnahme von Zugkräften beim Antreiben des Transportbandes dient.

Das gattungsgemäße Transportband weist dabei mindestens einen solchen Mitnehmerbereich aus einem vorzugsweise vollständig umlaufenden Flächengebilde auf, wobei das Flächengebilde eine Polymerschicht mit mindestens einer Verstärkungseinlage, z.B. einer Gewebelage oder einer Vlieslage (nonwoven), aufweist, wobei eine vorzugsweise gummierte Außenseite (Oberseite) des Flächengebildes insbesondere im Mitnehmerbereich zur Auflage und der Mitnahme des Fördergutes vorgesehen ist. Das Flächengebilde ist dabei in beliebiger Weise endlos zusammengefügt. Vorzugsweise ist die mindestens eine Verstärkungseinlage des Flächengebildes dabei in dem Mitnehmerbereich beidseitig von der Polymerschicht des Flächengebildes bedeckt oder lediglich innenseitig oder lediglich außenseitig von der Polymerschicht des Flächengebildes bedeckt.

Dabei kann weiterhin vorgesehen sein, dass auf der Außenseite (Oberseite) des Flächengebildes zumindest im Mitnehmerbereich abrollhemmende Strukturen bzw. Stege aufgebracht sind, die von der Außenseite leicht hervorstehen und über die gesamte Fläche gleichmäßig verteilt angeordnet sind, beispielsweise versetzt zueinander. Die abrollhemmenden Stege weisen beispielsweise jeweils eine abgerundete Form, beispielsweise Sichelform, oder eine kantige Form, beispielsweise Dreicksform, Zickzackform, Rautenform oder u-Form, auf, die jeweils senkrecht zur Förderrichtung hin offen ist. Die abrollhemmenden Stege dienen dabei dazu, das aufliegende Fördergut in dem Mitnehmerbereich zu halten, insbesondere bei einem in Querrichtung verkippten Transportband. Die sich ebenfalls in Querrichtung öffnenden abrollhemmenden Stege halten dann das entlang des Gefälles in Querrichtung abrollende Fördergut auf und hindern es daran, vom Transportband zu fallen.

Ferner sind mindestens zwei vorzugsweise vollständig umlaufende Zugbereiche aus jeweils mindestens einer Polymerschicht und mindestens einer Verstärkungseinlage, z.B. einer Gewebelage oder einer Vlieslage (nonwoven), vorgesehen, wobei zwischen diesen Zugbereichen das Flächengebilde verläuft. Das Flächengebilde kann beidseitig umlaufend durch die genähte Verbindung (gemäß Variante 2) mit den mindestens zwei Zugbereichen verbunden sein. Auch die Zugbereiche sind in beliebiger Weise endlos zusammengefügt. Eine Zugfestigkeit des Mitnehmerbereiches in Förderrichtung ist dabei vorzugsweise geringer als eine Zugfestigkeit des jeweiligen Zugbereiches in Förderrichtung, da der Zugbereich zum Antreiben des Transportbandes vorgesehen ist und daher höheren Zugbelastungen insbesondere in Förderrichtung ausgesetzt ist.

Vorzugsweise kann dazu vorgesehen sein, dass die höhere Zugfestigkeit in Förderrichtung in dem jeweiligen Zugbereich dadurch ausgebildet wird, dass
- die mindestens eine Verstärkungseinlage in dem jeweiligen Zugbereich aus einem zugfesteren Material gefertigt ist als das Material der mindestens einen Verstärkungseinlage in dem Mitnehmerbereich, und/oder
- die mindestens eine Polymerschicht in dem jeweiligen Zugbereich aus einem zugfesteren Material gefertigt ist als das Material der mindestens einen Polymerschicht in dem Mitnehmerbereich. Dies ist eine einfach umzusetzende Möglichkeit der Erhöhung der Zugfestigkeit.

Es können auch mehr als ein Mitnehmerbereich bzw. mehr als ein Flächengebilde und folglich auch mehr als zwei Zugbereiche vorgesehen sein, wenn es sich um ein breiteres Transportband handelt, das nicht nur außen, sondern auch mittig auf Antriebsrollen und/oder Umlenkrollen aufliegt.

Weiterhin sind mehrere Mitnehmerleisten vorgesehen, wobei sich die Mitnehmerleisten an der Außenseite des Flächengebildes in Querrichtung erstrecken, und ggf. auch darüber hinaus in die Zugbereiche hineinragen, und in dem Mitnehmerbereich zumindest zwischen den Zugbereichen mit dem Flächengebilde verbunden sind, beispielsweise über eine genähte Verbindung (gemäß Variante 1). Dabei kann auch eine (genähte) Verbindung mit den Zugbereichen ausgebildet sein, wenn die Mitnehmerleisten endseitig in diese hineinragen.

Vorzugsweise ist dabei vorgesehen, dass die mindestens eine Mitnehmerleiste durch einen entlang der Mitnehmerleiste verlaufenden Stab verstärkt ist, vorzugsweise einen Stab aus glasfaserverstärktem Kunststoff oder aus Metall, wobei der Stab vorzugsweise einen runden Querschnitt aufweist. Es sind aber auch andere Querschnitte möglich.

Außerdem ist vorzugsweise mindestens eine vollständig umlaufende Keilleiste vorgesehen, wobei die mindestens eine Keilleiste an einer Innenseite (Unterseite) des jeweiligen Zugbereiches verläuft, wobei auch die Keilleiste vorzugsweise vollständig umlaufend durch die genähte Verbindung (gemäß Variante 2) mit den Zugbereichen verbunden sein kann. Die Innenseite des Zugbereiches bildet dabei mit einer Innenseite des Flächengebildes eine Innenseite des Transportbandes mit aus und liegt daher der Außenseite des Flächengebildes gegenüber.

Demnach besteht der einheitliche Erfindungsgedanke darin, einzelne oder auch alle Komponenten des Transportbandes, d.h. mindestens eine Keilleiste (gemäß Variante 2) und/oder mindestens eine Mitnehmerleiste (gemäß Variante 1) und/oder der mindestens eine Zugbereich aus mindestens einer Polymerschicht und mindestens einer Verstärkungseinlage (gemäß Variante 2), über eine genähte Verbindung an die jeweils angrenzende Komponente anzufügen, um dadurch die Eigenschaften (höhere Zugfestigkeit, Robustheit, Belastbarkeit) und/oder Funktionen (Mitnehmerfunktion, Führungsfunktion) des Transportbandes zu verbessern oder zu erweitern.

Dadurch können bereits einige Vorteile erreicht werden: Beispielsweise kann ein aufwendiger und/oder langwieriger Verbindungsprozess wie Kleben, Schweißen, Vulkanisieren, Gießen und die dazugehörigen aufwändigen Werkzeuge entfallen, um die jeweilige Komponente mit dem Mitnehmerbereich und/oder dem Zugbereich zu verbinden. Mit einer genähten Verbindung lässt sich ein sehr langlebiger und robuster bzw. hochfester Übergang zwischen den jeweiligen Komponenten des Transportbandes schaffen, wobei das Ausbilden einer Naht ohne großen Aufwand erfolgen kann.

Auch bei einer Anpassung in der Konstruktion des Transportbandes durch eine Anpassung von Maßen oder Positionen der jeweiligen Komponenten kann die genähte Verbindung einfach und flexibel daran angepasst werden. Zudem ist das Material nicht zwangsläufig auf eine Heißbehandlung zum Ausbilden der Verbindung abzustimmen.

Grundsätzlich kann dennoch vorgesehen sein, dass
- die Komponenten, die nicht durch eine genähte Verbindung miteinander verbunden sind, stattdessen
- oder die Komponenten, die durch eine genähte Verbindung miteinander verbunden sind, ergänzend
über eine stoffschlüssige Verbindung, beispielsweise durch Vulkanisieren oder Kleben miteinander verbunden werden, um die jeweilige Verbindung auszubilden bzw. bei beispielsweise besonders hohen Belastungen zu stärken bzw. zu sichern.

Die Erfindung wird nachstehend anhand von Ausführungsbeispielen näher erläutert. Es zeigen:
- Fig. 1: ein auf einer Antriebsrolle und Umlenkrolle umlaufendes Transportband,
- Fig. 2A, 2B: das Transportband gemäß Fig. 1 in perspektivischen Detailansichten in unterschiedlichen Ausführungsformen eines Zugbereiches;
- Fig. 3A, 3B: das Transportband gemäß Fig. 1 in perspektivischen Detailansichten in weiteren Ausführungsformen mit einem separaten Zugträger im Zugbereich;
- Fig.4A, 4B: unterschiedliche Ausführungen von Keilleisten an einer Innenseite des Zugbereiches des Transportbandes gemäß Fig. 1;
- Fig. 5A-5F: unterschiedliche Ausführungen von Mitnehmerleisten auf einer Außenseite des Transportbandes gemäß Fig. 1.

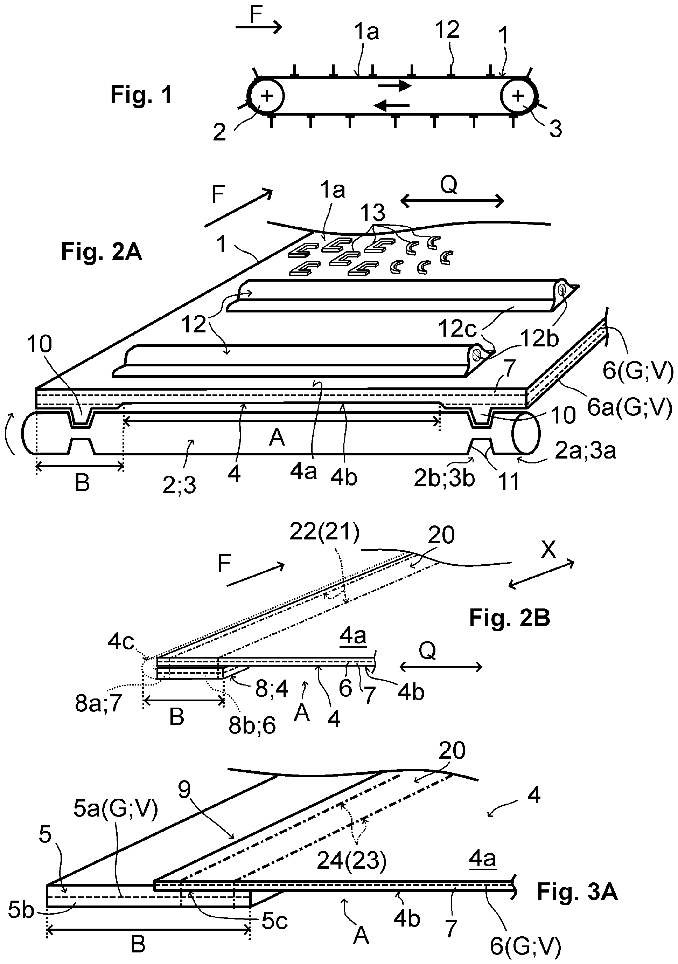

In Figur 1 ist ein endlos umlaufendes Transportband 1 für Landmaschinen dargestellt, das auf einer Antriebsrolle 2 und einer Umlenkrolle 3 umläuft. Ein derartig umlaufendes Transportband 1 dient beispielsweise der Querförderung von leichtem Schneidgut in einem Schneidwerk eines Mähdreschers oder in einem Mähwerk für das seitliche Ablegen des Schneidgutes in Schwaden. Ein derartiges Transportband 1 wird auch als Streckband, "Draper Belt", "Merger Belt" oder "Swather Belt" bezeichnet. Das jeweilige Fördergut liegt auf einer Oberfläche bzw. Außenseite 1a des Transportbandes 1 auf und wird in eine Förderrichtung F transportiert.

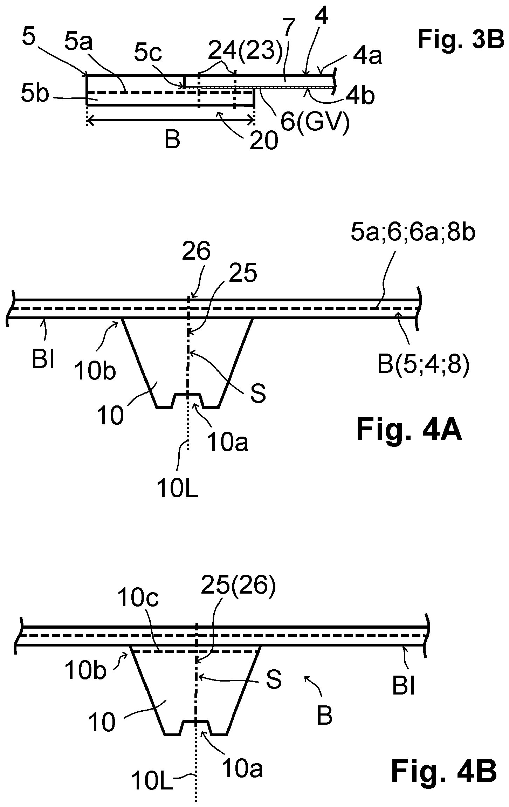

Gemäß den Figuren 2A, 2B, 3A, 3B ist das Transportband 1 in Querrichtung Q unterteilt in einen Mitnehmerbereich A und beidseitig daran angrenzende Zugbereiche B (in Fig. 2B, 3A, 3B nur einseitig dargestellt), die miteinander verbunden sind. Gemäß der Ausführung in den Figuren 2A und 2B geht der Mitnehmerbereich A unmittelbar in den jeweiligen Zugbereich B über. In dieser Ausführung besteht der Mitnehmerbereich A aus einem riemenartigen Flächengebilde 4, das mit einem modifizierten Aufbau in den jeweiligen Zugbereich B unmittelbar übergeht, wie nachfolgend erläutert. Gemäß der Ausführung in den Figuren 3A, 3B besteht der Mitnehmerbereich A ebenfalls aus diesem Flächengebilde 4, allerdings wird in dem jeweiligen Zugbereich B ein separater riemenartiger Zugträger 5 an das Flächengebilde 4 angefügt, wie nachfolgend beschrieben.

In allen Ausführungen können in Querrichtung Q auch mehrere Mitnehmerbereiche A vorgesehen sein, wobei sich dann eine Abfolge der Bereiche von B-A-B-A-B ergibt, d.h. an jeden Mitnehmerbereich A grenzt in Querrichtung Q zu beiden Seiten hin ein Zugbereich B an. Dies ist beispielsweise bei einem sehr breiten Transportband 1 mit einem zusätzlichen mittigen Antrieb und/oder einer zusätzlichen mittigen Abstützung der Fall.

Das riemenartige Flächengebilde 4 besteht vorliegend aus einem verstärkten Polymer, insbesondere Gummi, wobei das Flächengebilde 4 dazu in den dargestellten Ausführungsformen innerhalb des Mitnehmerbereiches A eine Verstärkungseinlage 6 aufweist, die in eine Polymerschicht 7 des Flächengebildes 4 eingebettet ist. Die Verstärkungseinlage 6 kann je nach Anforderungen an die (Zug-)Festigkeit eine Gewebelage G oder eine Vlieslage V ("nonwoven") sein.

In den Ausführungsformen der Figuren 2A, 2B und 3A liegt die Verstärkungseinlage 6 im Mitnehmerbereich A in der neutralen Faser bzw. in etwa mittig innerhalb des Flächengebildes 4, d.h. eine Außenseite 4a und eine Innenseite 4b des Flächengebildes 4 sind jeweils gummiert. In der Ausführungsform gemäß Fig. 3B hingegen bildet die Verstärkungseinlage 6 gleichzeitig auch die Innenseite 4b des Flächengebildes 4 aus, so dass dieses nur außenseitig gummiert ist.

In dem Mitnehmerbereich A des Transportbandes 1 ist nur eine geringe Zugfestigkeit erforderlich, da das Fördergut auf dem Transportband 1 im Mitnehmerbereich A lediglich aufliegt und mitgenommen wird und daher keine oder nur geringe Zugkräfte wirken, so dass in diesem Bereich des Flächengebildes 4 eine einzelne Verstärkungseinlage 6, insbesondere eine einzelne Vlieslage V, ausreichend ist. Im Gegensatz dazu weist der daran angrenzende Zugbereich B des Transportbandes 1 eine hohe Zugfestigkeit auf. Denn über den Zugbereich B wird das Transportband 1 wie nachfolgend noch näher erläutert angetrieben, so dass diese Zugbereiche B des Transportbandes 1 im Betrieb hohen Zugkräften ausgesetzt sind.

Eine hohe Zugfestigkeit kann beispielsweise dadurch erreicht werden, dass in das Flächengebilde 4 im Zugbereich B jeweils zwei parallel übereinanderliegende und voneinander beabstandete Verstärkungseinlagen 6, 6a eingebettet werden. Dazu verläuft die Verstärkungseinlage 6 des Flächengebildes 4 wie in der Ausführung in Fig. 2A dargestellt aus dem Mitnehmerbereich A auch in den Zugbereich B hinein, in den parallel darunterliegend eine weitere Zusatz-Verstärkungseinlage 6a (Vlieslage V oder Gewebelage G) in die Polymerschicht 7 eingebettet ist. Der Zugbereich B wird also durch zwei Verstärkungseinlagen 6, 6a verstärkt. Die Zusatz-Verstärkungseinlage 6a kann dabei identisch zur Verstärkungseinlage 6 des Flächengebildes 4 ausgeführt sein, d.h. beispielsweise ebenfalls als Vlieslage V, oder aber unterschiedlich, d.h. beispielsweise als Gewebelage G.

Zum Ausbilden einer hohen Zugfestigkeit in dem Zugbereich B kann alternativ vorgesehen sein, das Flächengebilde 4 mit lediglich einer eingebetteten Verstärkungseinlage 6 (Vlieslage V oder Gewebelage G) randseitig so umzuschlagen bzw. auf sich zurückzuschlagen, dass sich ein Saum 4c ausbildet, wie in Fig. 2B gestrichelt angedeutet. Stattdessen kann aber auch vorgesehen sein, auf den Saum 4c zu verzichten und einen separaten flächigen Gummistreifen 8 zu verwenden, der ebenfalls aus einem verstärkten, vernetzten Polymer mit beispielsweise einer in die Polymerschicht 8a des Gummistreifens 8 eingebetteten Verstärkungseinlage 8b (Vlieslage V oder Gewebelage G) besteht. Dieser Gummistreifen 8 wird in dem Zugbereich B an die Innenseite 4b des Flächengebildes 4 angefügt. In diesen beiden in Fig. 2B angedeuteten Ausführungen liegen in dem Zugbereich B ebenfalls zwei Verstärkungseinlagen 6, 6 (umgeschlagen) oder 6, 8b parallel und beabstandet übereinander, wodurch sich die Zugfestigkeit im Zugbereich B erhöht.

In diesen Ausführungen kann eine Verbindung zwischen den im Zugbereich B übereinanderliegenden und verstärkten Polymerschichten 7; 7 (umgeschlagen) oder 7, 8a vorzugsweise dadurch ausgebildet werden, dass diese Polymerschichten 7; 8a im Zugbereich B in die longitudinale Richtung X bzw. in die Förderrichtung F bzw. vollständig umlaufend um das Transportband 1 zusammengenäht werden. Dazu durchdringt ein erster Faden 21 in dem Zugbereich B in mehreren Stichen S die beiden aufeinanderliegenden Polymerschichten 7; 8a derartig, dass sich eine vollständig umlaufende Zugbereich-Naht 22 ausbildet. Je nach Anordnung der Stiche S können unterschiedliche Nahtformen der Zugbereich-Naht 22 resultieren. Im dargestellten Beispiel verlaufen im Zugbereich B zwei derartige Zugbereich-Nähte 22 parallel zueinander, um die beiden Polymerschichten 7; 8a im jeweiligen Zugbereich B flächig sicher zusammenzuhalten.

Da sich in den aufeinanderliegenden Polymerschichten 7; 8a jeweils mindestens eine Verstärkungseinlage 6, 6 (umgeschlagen) oder 6, 8b befindet, die von dem ersten Faden 21 in den Stichen S ebenfalls durchstoßen werden, entsteht eine hochfeste genähte Verbindung zwischen beiden, die hohen Belastungen standhalten kann. Wird die Zugbereich-Naht 22 mit einer entsprechend hohen Spannung des ersten Fadens 21 ausgebildet, taucht dieser zwischen den Stichen S oberflächlich auch in die Polymerschichten 7; 8a ein, so dass der erste Faden 21 im Betrieb vor einem Abrieb oder vor äußeren Einflüssen weitestgehend geschützt ist.

Um innerhalb des Zugbereiches B eine höhere Zugfestigkeit auszubilden als innerhalb des Mitnehmerbereiches A ist sowohl in der Ausführung in Fig. 2A als auch in den Ausführungen gemäß Fig. 2B vorgesehen, dass eine Anzahl an Verstärkungseinlagen 6, 6a; 8b innerhalb des Zugbereiches B höher ist als eine Anzahl an Verstärkungseinlagen 6 innerhalb des Mitnehmerbereiches A. Ergänzend oder alternativ dazu kann die höhere Zugfestigkeit im Zugbereich B aber auch dadurch erreicht werden, dass bei einer einfachen oder mehrfachen Verstärkungseinlage eine zugfestere Materialkombination gewählt wird. Dies ist beispielhaft in den Figuren 3A und 3B dargestellt:
Demnach wird der jeweilige Zugbereich B durch einen zusätzlichen riemenartigen Zugträger 5 gebildet, der lediglich eine Verstärkungseinlage 5a (Vlieslage V oder Gewebelage G) innerhalb einer Polymerschicht 5b aufweist. Das Material der Verstärkungseinlage 5a und/oder das Material der Polymerschicht 5b sind dabei derartig gewählt, dass die Zugfestigkeit des Zugträgers 5 größer ist als die Zugfestigkeit des Flächengebildes 4, an den dieser Zugträger 5 nachträglich angefügt ist. Grundsätzlich kann dies aber auch mit einem zusätzlich angefügten Zugträger 5 erreicht werden, der mehr als eine Verstärkungseinlage 5a aufweist.

Wie auch bei den vorangegangenen Ausführungsformen gemäß Fig. 2A und Fig. 2B können durch diesen zusätzlichen Zugträger 5 Kosten gespart werden, da nicht das gesamte Transportband 1 aus einem hochfesten bzw. hochzugfesten Material zu fertigen ist, sondern nur die stärker belasteten Zugbereiche B.

Der Zugträger 5 ist dabei an das Flächengebilde 4 angefügt, wie in den Figuren 3A, 3B beispielhaft dargestellt. Dabei ist der Zugträger 5 in Querrichtung Q abgestuft, indem die außen liegende Decklage der Polymerschicht 5b des Zugträgers 5 unter Ausbildung einer Stufe 5c zumindest teilweise abgetragen wird. Alternativ kann auch die innen liegende Decklage der Polymerschicht 5b des Zugträgers 5 abgetragen werden (nicht dargestellt). Auf die außenseitig (oder innenseitig) ausgebildete Stufe 5c wird das Flächengebilde 4 randseitig mit seiner Innenseite 4b (oder seiner Außenseite 4a) flächig und passgenau aufgelegt. Der abgetragene Teil des Zugträgers 5 wird also durch das Flächengebilde 4 wieder "aufgefüllt", so dass die Belastbarkeit oder Zugfestigkeit des Transportbandes 1 im Zugbereich B auch weiterhin hoch bleibt. Die Stufe 5c wird dabei derartig ausgebildet, dass außenseitig (oder innenseitig) zwischen dem Zugträger 5 und dem Flächengebilde 4 kein oder nur ein minimaler Überstand 9 verbleibt.

Dies kann dadurch optimiert werden, dass wie in Fig. 3B dargestellt die Verstärkungseinlage 6 des Flächengebildes 4 gleichzeitig auch die Innenseite 4b des Flächengebildes 4 ausbildet, so dass die innenseitige Decklage der Polymerschicht 7 des Flächengebildes 4 entfällt. Das Flächengebilde 4 gemäß Fig. 3B ist also gegenüber der Ausführung in Fig. 3A (zweiseitige Gummierung) dünner, so dass nach dem Auflegen auf die Stufe 5c des Zugträgers 5 (idealerweise) kein Überstand 9 mehr bleibt. Weiterhin wird erreicht, dass die Verstärkungseinlage 6 des Flächengebildes 4 näher an der Ebene der Verstärkungseinlage 5a des Zugträgers 5 liegt bzw. näher an einer neutralen Faser des Transportbandes 1 insgesamt, wodurch der Betrieb des Transportbandes 1 insgesamt optimiert wird. Da die Innenseite 4b des Flächengebildes 4 normalerweise keinen größeren äußeren mechanischen Einflüssen ausgesetzt ist, kann die Verstärkungseinlage 6 des Flächengebildes 4 nach innen hin offenliegen.

Die Verbindung zwischen dem Zugträger 5 und dem Flächengebilde 4 wird vorzugsweise dadurch ausgebildet, dass diese im Zugbereich B in die longitudinale Richtung X bzw. in die Förderrichtung F bzw. vollständig umlaufend um das Transportband 1 zusammengenäht werden. Dazu durchdringt ein zweiter Faden 23 in mehreren voneinander beabstandeten Stichen S das Flächengebilde 4 sowie den Zugträger 5 im Bereich der ausgebildeten Stufe 5c derartig, dass sich eine vollständig umlaufende Übergangs-Naht 24 ausbildet. Je nach Anordnung der Stiche S können unterschiedliche Nahtformen der Übergangs-Naht 24 resultieren. Im dargestellten Beispiel verlaufen im Zugbereich B zwei derartige Übergangs-Nähte 24 parallel zueinander, um das Flächengebilde 4 und den Zugträger 5 flächig zusammenzuhalten.

Da sich in dem Flächengebilde 4 und dem Zugträger 5 jeweils mindestens eine Verstärkungseinlage 6, 5a befinden, die von dem zweiten Faden 23 in den Stichen S ebenfalls durchstoßen werden, entsteht eine hochfeste genähte Verbindung zwischen beiden, die hohen Belastungen standhalten kann. Wird die Übergangs-Naht 24 mit einer entsprechend hohen Spannung des zweiten Fadens 23 ausgebildet, taucht dieser zwischen den Stichen S oberflächlich auch in die jeweiligen Polymerschichten 7; 5b ein, so dass der zweite Faden 23 im Betrieb vor einem Abrieb oder vor äußeren Einflüssen weitestgehend geschützt ist.

Wie in den bisher diskutierten Figuren dargestellt, befindet sich an einer Innenseite BI des jeweiligen Zugbereiches B eine Keilleiste 10, die sich in Längsrichtung X bzw. in Förderrichtung F bzw. vollständig umlaufend um das gesamte Transportband 1 erstreckt. Die Antriebsrolle(n) 2 und/oder die Umlenkrolle(n) 3 weisen in ihren beiden Endbereichen 2a, 3a jeweils im Querschnitt komplementär zur Keilleiste 10 ausgeführte umlaufende Nuten 2b, 3b auf, in denen die jeweilige Keilleiste 10 bei einer Umdrehung der Antriebsrolle(n) 2 bzw. Umlenkrolle(n) 3 aufgenommen werden kann, wie in Fig. 2 angedeutet. Demnach dient die Keilleiste 10 dazu, das Transportband 1 im Betrieb auf den Antriebsrolle(n) 2 und/oder Umlenkrolle(n) 3, die beispielsweise als Walzenrollen ausgeführt sind, zu führen und damit eine Bewegung des darauf aufliegenden Transportbandes 1 in die Querrichtung Q weitestgehend zu vermeiden. Um dies zu erreichen, kann auch nur eine Keilleiste 10 am Transportband 1 vorgesehen sein, d.h. in nur einem der Zugbereiche B.

Da sich diese Keilleisten 10 innenseitig an den zusätzlich in entsprechender Weise (wie oben erläutert) verstärkten Zugbereichen B befinden, können Kräfte in Querrichtung Q, die beim Anlaufen der Keilleiste 10 gegen eine Seitenwange 11 der jeweiligen Nut 2b, 3b auftreten, vom Zugbereich B effektiv aufgenommen und abgeführt und damit ein erhöhter Kantenverschleiß des Transportbandes 1 vermieden werden. Unter Umständen können auch geringfügige Zugkräfte, die durch das Antreiben entstehen, über die Keilleiste 10 in den Zugbereich B abgeführt werden.

Wie in Fig. 2A dargestellt, können die Keilleisten 10 einteilig mit dem jeweiligen Zugbereich B gefertigt sein, wobei die Keilleisten 10 dazu beispielsweise im Herstellungsprozess zusammen mit dem Flächengebilde 4 beispielsweise vulkanisiert, oder dgl., werden können. Wie in Fig. 4A oder 4B dargestellt, können die Keilleisten 10 aber auch nachträglich innenseitig an die jeweiligen Lagen des Zugbereich B angefügt werden, insbesondere an den Zugbereich B innenseitig angenäht werden und/oder durch eine stoffschlüssige Verbindung innenseitig angeklebt werden. Dadurch kann eine derartige Keilleiste 10 auch nachträglich an die Innenseite BI eines Zugbereiches B angefügt werden, der gemäß einer der Fig. 2B, 3A und 3B konstruiert ist.

Es kann auch vorgesehen sein, dass ein separater Zugbereich B zusammen mit der Keilleiste 10 zunächst fertiggestellt wird, beispielsweise durch Vulkanisieren oder durch nachträgliches Zusammenfügen (Nähen, Kleben, etc.) und diese Kombination nachträglich an das Flächengebilde 4 angefügt wird, beispielsweise angenäht, angeklebt, angeschweißt, anvulkanisiert, etc.. Das vereinfacht die Herstellung, da in der jeweiligen Maschine ein schmalerer Bereich (lediglich der Zugbereich B) mit der senkrecht abstehenden Keilleiste zu bearbeiten ist und nicht das gesamte Flächengebilde 4 bzw. Transportband 1 mit seiner größeren Querausdehnung.

Um eine genähte Verbindung zu erhalten, durchdringt ein dritter Faden 25 in dem Zugbereich B in mehreren voneinander beabstandeten Stichen S die Keilleiste 10 sowie die daran angrenzende Lage des Zugbereiches B, d.h. das angrenzende Flächengebilde 4 und/oder den angrenzenden Gummistreifen 8 (vgl. Fig. 2B) oder den angrenzenden Zugträger 5 (vgl. Fig. 3A, 3B). Dadurch bildet sich im Zugbereich B eine in longitudinaler Richtung X bzw. in die Förderrichtung F ausgedehnte bzw. eine vollständig umlaufende Keilleisten-Naht 26, wobei die Stiche S dieser Keilleisten-Naht 26 vorzugsweise in etwa entlang einer Längsmittelachse 10L der Keilleiste 10 verlaufen.

Die Keilleiste 10 selbst besteht aus einem in Längsrichtung X oder Förderrichtung F bzw. vollständig um das Transportband 1 umlaufend ausgedehnten, im Querschnitt trapezförmigen Keilkörper, dessen längere Grundseite an der Innenseite BI des Zugbereichs B anliegt oder gemäß Fig. 2A in das Flächengebilde 4 unmittelbar übergeht. Die Keilleiste 10 wird beispielsweise in einem Extrusionsverfahren aus Gummi oder einem Kunststoff, z.B. PVC, PU, gefertigt und entsprechend derartig abgelängt, dass diese einmal umlaufend innenseitig an den Zugbereich B angefügt, insbesondere angenäht, werden kann.

Auf der der Innenseite BI des Zugbereichs B gegenüberliegenden kürzeren Grundseite der trapezförmigen Keilleiste 10 ist gemäß Fig. 4A, 4B eine Nut 10a eingebracht, in der bei einer genähten Verbindung der dritte Faden 25 verläuft. Dadurch berührt der dritte Faden 25 die Antriebsrolle 2 und/oder Umlenkrolle 3 im Betrieb des Transportbandes 1 nicht, so dass dieser vor Abrieb geschützt werden kann.

Die Stiche S der Keilleisten-Naht 26 verlaufen wie in Fig. 4A dargestellt auch durch die jeweilige Verstärkungseinlage 6, 6a; 8b, 5a des Flächengebildes 4 bzw. des Gummistreifens 8 bzw. des Zugträgers 5, so dass eine hochfeste genähte Verbindung ausgebildet wird. Um diese weiter zu verbessern, kann wie in Fig. 4B dargestellt in einem Fußbereich 10b der Keilleiste 10, der der Innenseite BI des Zugbereichs B zugewandt ist, ebenfalls eine Verstärkungseinlage 10c (Vlieslage V oder Gewebelage G) eingebettet sein, so dass die Stiche S der Keilleisten-Naht 26 auch diese durchstoßen und die genähte Verbindung noch robuster wird.

Gemäß einer Ausführung kann auch vorgesehen sein, zumindest eine der Zugbereich-Nähte 22 und die Keilleisten-Naht 26 miteinander zu kombinieren. Der erste Faden 21 bzw. der dritte Faden 25 durchstoßen dann sowohl die Keilleiste 10 als auch die beiden in Fig. 2B dargestellten übereinanderliegenden verstärkten Polymerschichten 7; 7 (umgeschlagen) oder 7, 8a. Dadurch wird mit nur einem Faden 21, 25 sowohl die Keilleiste 10 innenseitig an den Zugbereich B angefügt als auch die beiden Polymerschichten 7; 7 (umgeschlagen) oder 7, 8a miteinander verbunden.

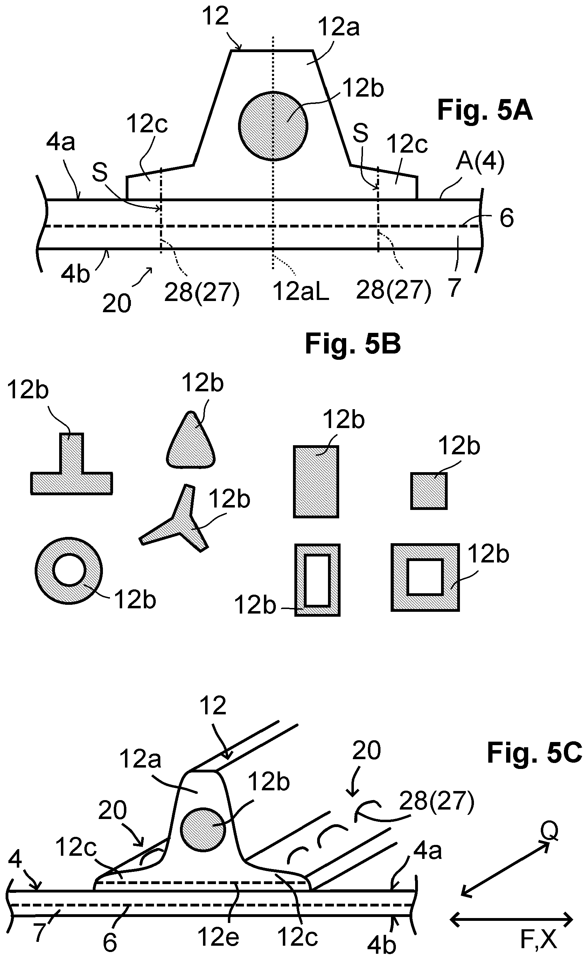

Ferner weist das Transportband 1 in Querrichtung Q ausgedehnte Mitnehmerleisten 12 auf, die sich auf der Außenseite 1a des Transportbandes 1 bzw. der Außenseite 4a des Flächengebildes 4 befinden, d.h. auf der gegenüberliegenden Seite der Keilleiste 10. Die Mitnehmerleisten 12 dienen dazu, das auf der Außenseite 1a aufliegende Fördergut in die Förderrichtung F bzw. in die longitudinale Richtung X mitzunehmen. Die Mitnehmerleisten 12 sind dazu insbesondere im Mitnehmerbereich A an das entsprechend verstärkte Flächengebilde 4 außenseitig angefügt, insbesondere ebenfalls angenäht, wie in den Fig. 5A-5F in unterschiedlichen Ausführungen detailliert dargestellt.

Dabei kann weiterhin vorgesehen sein, dass auf der Außenseite 4a des Flächengebildes 4 zumindest im Mitnehmerbereich A abrollhemmende Stege 13 aufgebracht sind, die von der Außenseite 4a leicht hervorstehen und über die gesamte Fläche gleichmäßig verteilt angeordnet sind, beispielsweise versetzt zueinander, wie für einen Teilbereich in Fig. 2A angedeutet. Die abrollhemmenden Stege 13 weisen beispielsweise jeweils eine abgerundete Form, beispielsweise Sichelform, oder eine kantige Form, beispielsweise Dreicksform, Zickzackform, Rautenform oder u-Form, auf, die jeweils senkrecht zur Förderrichtung F hin offen ist. Die abrollhemmenden Stege 13 dienen dabei dazu, das aufliegende Fördergut in dem Mitnehmerbereich A zu halten, insbesondere bei einem in Querrichtung Q verkippten Transportband 1. Die sich ebenfalls in Querrichtung Q (nach oben hin) öffnenden abrollhemmenden Stege 13 halten dann das entlang des Gefälles in Querrichtung Q abrollende Fördergut auf und hindern es daran, vom Transportband 1 zu fallen.

Die Mitnehmerleiste 12 weist in jeglichen Ausführungen einen in Querrichtung Q ausgedehnten stegartig ausgebildeten Mitnehmerkörper 12a auf, der im Wesentlichen über die gesamte Länge der Mitnehmerleiste 12 ein Stab 12b umschließt. Der Stab 12b ist beispielsweise aus glasfaserverstärktem Kunststoff (GFK) oder aus Metall oder einem ähnlich festen Material gefertigt und weist einen runden Querschnitt (s. Fig. 5A) oder einen andersartig profilierten Querschnitt (s. Fig. 5B) auf. Der Stab 12b kann direkt beim Herstellen des Mitnehmerkörpers 12a, beispielsweise in einem Vulkanisierungsprozess, in diesen eingebettet werden. Alternativ kann der Stab 12b nach der Herstellung des Mitnehmerkörpers 12a in ein komplementär dazu geformtes Loch oder einen Kanal im Mitnehmerkörper 12a eingesteckt und anschließend damit verbunden werden, beispielsweise stoffschlüssig.

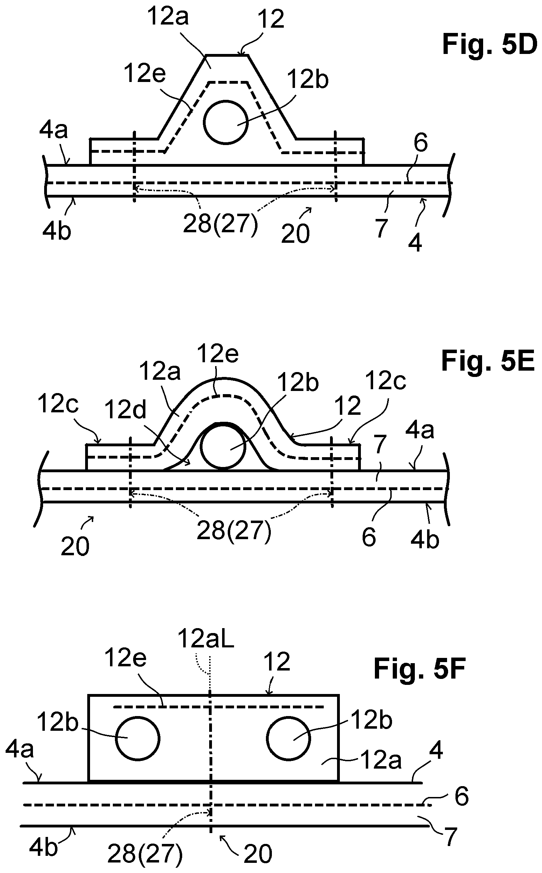

Der Mitnehmerkörper 12a geht gemäß den Ausführungen in Fig. 5A, 5C, 5D, 5E innenseitig zu beiden Längsseiten hin in zwei Füße 12c über, die sich als Basis über die gesamte Länge der Mitnehmerleiste 12 erstrecken. Über diese Füße 12c liegt die Mitnehmerleiste 12 zumindest auf dem Flächengebilde 4 auf seiner Außenseite 4a auf und ist darüber auch an diesem befestigt, vorzugsweise daran angenäht. In der Ausführung gemäß Fig. 5F erfolgt die (genähte) Befestigung nicht über solche Füße 12c, wie nachfolgend noch erläutert. Die jeweilige Mitnehmerleiste 12 kann sich seitlich auch über den Mitnehmerbereich A hinaus in die Zugbereiche B erstrecken und auch daran in entsprechende Weise befestigt sein.

Der Mitnehmerkörper 12a und die Füße 12c (insofern vorhanden) der jeweiligen Mitnehmerleiste 12 sind aus einem Gummi oder einem Kunststoff gefertigt, z.B. PVC, PU, vorzugsweise in einem beliebigen Vulkanisierungsprozess (z.B. Compression Moulding, Transfer Moulding, Injection Moulding). Der Mitnehmerkörper 12a kann dabei in unterschiedlichen Formen gefertigt werden. Gemäß Fig. 5A, 5C und 5D ist der Mitnehmerkörper 12a im Querschnitt trapezförmig ausgeführt, wobei dieser trapezförmige Mitnehmerkörper 12a an seiner langen Grundseite in die Füße 12c übergeht, über die er an das Flächengebilde 4 angefügt wird. Der Stab 12b ist im Wesentlichen in den trapezförmigen Bereich eingebettet.

Gemäß Fig. 5E weist der Mitnehmerkörper 12a einen flachen, rechteckigen Querschnitt auf, wobei die längsseitigen Endbereiche die Füße 12c ausbilden, die auf dem Flächengebilde 4 aufliegen, und der dazwischenliegende mittlere Bereich nach außen hin umgebogen oder umgeformt ist, so dass sich ein Kanal 12d oder Zwischenraum oberhalb der Außenseite 4a des Flächengebildes 4 ausbildet. In dem Kanal 12d wird der Stab 12b durch Klemmung oder durch Formschluss gehalten. Gemäß Fig. 5F ist der Mitnehmerkörper 12a ebenfalls im Querschnitt rechteckig ausgeführt, wobei zwei Stäbe 12b in den Mitnehmerkörper 12a eingebettet sind und der Mitnehmerkörper 12a flächig auf der Außenseite 4a des Flächengebildes 4 aufliegt. Vorzugsweise kann aber auch ein runder Querschnitt des Mitnehmerkörpers 12a vorgesehen sein (nicht dargestellt).

Für eine genähte Verbindung durchdringt ein vierter Faden 27 in mehreren Stichen S das Flächengebilde 4 und den darauf aufliegenden Fuß 12c der jeweiligen Mitnehmerleiste 12 (gemäß Fig. 5A, 5C, 5D, 5E) derartig, dass sich im Wesentlichen über die gesamte Länge der Mitnehmerleiste 12 eine Mitnehmer-Naht 28 ausbildet. Je nach Anordnung der Stiche S können unterschiedliche Nahtformen der Mitnehmer-Naht 28 resultieren. Eine derartige Mitnehmer-Naht 28 ist zu beiden Längsseiten hin in beide Füße 12c eingebracht, um eine beidseitige Befestigung der Mitnehmerleiste 12 zu erreichen.

Die Stiche S der jeweiligen Mitnehmer-Naht 28 verlaufen wie in Fig. 5A dargestellt auch durch die jeweilige Verstärkungseinlage 6 des Flächengebildes 4, so dass eine hochfeste genähte Verbindung ausgebildet wird. Um diese weiter zu verbessern, kann wie in Fig. 5C, 5D und 5E dargestellt, eine Verstärkungseinlage 12e (Vlieslage V oder Gewebelage G) auch in die Mitnehmerleiste 12 eingebettet sein, insbesondere im Bereich der Füße 12c, so dass die Stiche S der Mitnehmer-Naht 28 auch diese durchstoßen und die genähte Verbindung noch robuster wird. Zwischen den Füßen 12c kann die Verstärkungseinlage 12e der Mitnehmerleiste 12 unterhalb oder oberhalb des Stabes 12b durch den jeweiligen Mitnehmerkörper 12a verlaufen, wie in den Figuren 5A bis 5E beispielhaft dargestellt.

Gemäß der Ausführung in Fig. 5F wird die genähte Verbindung dadurch ausgebildet, dass der vierte Faden 27 in den mehreren Stichen S in etwa entlang einer Längsmittelachse 12aL des im Querschnitt rechteckigen Mitnehmerkörpers 12a verläuft. Demnach ist nur eine Mitnehmer-Naht 28 vorgesehen. Die Verstärkungseinlage 12e der Mitnehmerleiste 12 liegt in dem Fall oberhalb der beiden Stäbe 12b und wird von der Mitnehmer-Naht 28 ebenfalls durchstoßen. Die Verstärkungseinlage 12e kann aber auch unterhalb der beiden Stäbe 12b auf der der Außenseite 4a des Flächengebildes 4 zugewandten Seite der Mitnehmerleiste 12 angeordnet sein.

Somit können einzelne Komponenten des Transportbandes 1 über Fäden 21, 23, 25, 27 bzw. Nähte 22, 24, 26, 28 in einfacher und robuster Weise angefügt werden, was einen flexiblen Einsatz ermöglicht, da eine solche genähte Verbindung einfach an geänderte Konstruktionen oder Abmessungen der einzelnen Komponenten angepasst werden kann, ohne dabei den gesamten Herstellungsprozess anzupassen. Dabei kann vorgesehen sein, dass nur ein oder einzelne der genannten Komponenten über die jeweiligen Nähte 22, 24, 26, 28 am Transportband 1 befestigt werden und die weiteren Komponente(n) über herkömmliche Verbindungsarten anzufügen, beispielsweise durch Kleben, Vulkanisieren, Angießen, Schweißen. Weiterhin kann die jeweilige genähte Verbindung auch durch eine beispielsweise stoffschlüssige Verbindung abgesichert werden.

### Bezugszeichenliste

- 1: Transportband
- 1a: Außenseite des Transportbandes
- 2: Antriebsrolle
- 2a: Endbereich der Antriebsrolle 2
- 2b: Nut in der Antriebsrolle 2
- 3: Umlenkrolle
- 3a: Endbereich der Umlenkrolle 3
- 3b: Nut in der Umlenkrolle 3
- 4: Flächengebilde
- 4a: Außenseite des Flächengebildes 4
- 4b: Innenseite des Flächengebildes 4
- 4c: Saum des Flächengebildes 4
- 5: Zugträger
- 5a: Verstärkungseinlage des Zugträgers 5
- 5b: Polymerschicht des Zugträgers 5
- 5c: Stufe im Zugträger 5
- 6: Verstärkungseinlage des Flächengebildes 4
- 6a: Zusatz-Verstärkungseinlage
- 7: Polymerschicht des Flächengebildes 4
- 8: Gummistreifen
- 8a: Polymerschicht des Gummistreifens 8
- 8b: Verstärkungseinlage des Gummistreifens 8
- 9: Überstand
- 10: Keilleiste
- 10a: Nut in der Keilleiste 10
- 10b: Fußbereich der Keilleiste 10
- 10c: Verstärkungseinlage der Keilleiste 10
- 10L: Längsmittelachse der Keilleiste 10
- 11: Seitenwangen in der Nut 2b, 3b
- 12: Mitnehmerleiste
- 12a: Mitnehmerkörper
- 12aL: Längsmittelachse der Mitnehmerleiste 12
- 12b: Stab
- 12c: Fuß der Mitnehmerleiste 12
- 12d: Kanal
- 12e: Verstärkungseinlage der Mitnehmerleiste 12
- 13: abrollhemmende Stege
- 20: genähte Verbindung
- 21: erster Faden
- 22: Zugbereich-Naht
- 23: zweiter Faden
- 24: Übergangs-Naht
- 25: dritter Faden
- 26: Keilleisten-Naht
- 27: vierter Faden
- 28: Mitnehmer-Naht
- A: Mitnehmerbereich
- B: Zugbereich
- BI: Innenseite des Zugbereiches B
- F: Förderrichtung
- G: Gewebelage
- Q: Querrichtung
- S: Stich
- V: Vlieslage
- X: longitudinale Richtung
- Z: vertikale Richtung

## Patentansprüche

1. Transportband (1) für Landmaschinen, insbesondere Streckband zum Transport von Fördergut in eine Förderrichtung (F), aufweisend:
- mindestens einen Mitnehmerbereich (A) aus einem um das Transportband (1) umlaufenden Flächengebilde (4) aus einer Polymerschicht (7), wobei das Flächengebilde (4) durch mindestens eine Verstärkungseinlage (6) verstärkt ist, wobei eine Außenseite (4a) des Flächengebildes (4) zur Auflage des Fördergutes vorgesehen ist;
- mindestens zwei um das Transportband (1) umlaufende Zugbereiche (B) aus jeweils mindestens einer Polymerschicht (5b; 7; 8a), wobei die Zugbereiche (B) jeweils durch mindestens eine Verstärkungseinlage (6; 6a; 5a; 8b) verstärkt sind und das Flächengebilde (4) zwischen den Zugbereichen (B) verläuft; und
- mehrere Mitnehmerleisten (12), wobei sich die Mitnehmerleisten (12) an der Außenseite (4a) des Flächengebildes (4) in Querrichtung (Q) erstrecken und in dem Mitnehmerbereich (A) zumindest zwischen den Zugbereichen (B) mit dem Flächengebilde (4) verbunden sind;
**dadurch gekennzeichnet, dass**
mindestens eine genähte Verbindung (20) ausgebildet ist
-- in Querrichtung (Q) verlaufend zwischen mindestens einer der Mitnehmerleisten (12) und dem Flächengebilde (4), um die mindestens eine Mitnehmerleiste (12) mit dem Flächengebilde (4) zu verbinden, und/oder
-- umlaufend um das Transportband (1) in mindestens einem der Zugbereiche (B).

2. Transportband (1) nach einem der vorhergehenden Ansprüche,
**dadurch gekennzeichnet, dass** eine Zugfestigkeit des jeweiligen Zugbereiches (B) in Förderrichtung (F) höher ist als eine Zugfestigkeit des Mitnehmerbereiches (A) in Förderrichtung (F).

3. Transportband (1) nach Anspruch 2, **dadurch gekennzeichnet, dass** die höhere Zugfestigkeit in Förderrichtung (F) in dem jeweiligen Zugbereich (B) dadurch ausgebildet wird, dass eine Anzahl an Verstärkungseinlagen (6; 6a; 5a; 8b) in dem jeweiligen Zugbereich (B) größer ist als eine Anzahl an Verstärkungseinlagen (6) in dem Mitnehmerbereich (A).

4. Transportband (1) nach Anspruch 3, **dadurch gekennzeichnet, dass** das Flächengebilde (4) mit seiner mindestens einen Verstärkungseinlage (6) auch in den jeweiligen Zugbereich (B) ragt, wobei innerhalb der Polymerschicht (7) des Flächengebildes (4) innerhalb des jeweiligen Zugbereiches (B) ergänzend mindestens eine Zusatz-Verstärkungseinlage (6a) flächig oberhalb und/oder flächig unterhalb der Verstärkungseinlage (6) angeordnet ist zum Bewirken einer höheren Zugfestigkeit in dem jeweiligen Zugbereich (B).

5. Transportband (1) nach Anspruch 3, **dadurch gekennzeichnet, dass** das Flächengebilde (4) mit seiner mindestens einen Verstärkungseinlage (6) auch in den jeweiligen Zugbereich (B) ragt, wobei in dem jeweiligen Zugbereich (B) ein Gummistreifen (8) außenseitig und/oder innenseitig an das Flächengebilde (4) angefügt ist zum Bewirken einer höheren Zugfestigkeit in dem jeweiligen Zugbereich (B), wobei der Gummistreifen (8) mindestens eine Verstärkungseinlage (8b) aufweist, die außenseitig und/oder innenseitig von einer Polymerschicht (8a) bedeckt ist, und wobei der Gummistreifen (8) vorzugsweise durch die in dem jeweiligen Zugbereich (B) um das Transportband (1) umlaufende genähte Verbindung (20) an das Flächengebilde (4) angefügt ist.

6. Transportband (1) nach Anspruch 3, **dadurch gekennzeichnet, dass** das Flächengebilde (4) mit seiner mindestens einen Verstärkungseinlage (6) auch in den jeweiligen Zugbereich (B) ragt, wobei das Flächengebilde (4) in dem jeweiligen Zugbereich (B) unter Ausbildung eines Saums (4c) auf sich selbst umgeschlagen ist zum Ausbilden einer höheren Zugfestigkeit in dem jeweiligen Zugbereich (B),
wobei der Saum (4c) vorzugsweise durch die in dem jeweiligen Zugbereich (B) um das Transportband (1) umlaufende genähte Verbindung (20) zusammengehalten ist.

7. Transportband (1) nach einem der Ansprüche 2 oder 3, **dadurch gekennzeichnet, dass** der jeweilige Zugbereich (B) durch einen separaten Zugträger (5) ausgebildet ist, wobei der Zugträger (5) umlaufend um das Transportband (1) seitlich an das Flächengebilde (4) angefügt ist, vorzugsweise durch die in dem jeweiligen Zugbereich (B) um das Transportband (1) umlaufende genähte Verbindung (20), wobei der Zugträger (5) mindestens eine Verstärkungseinlage (5a) aufweist, die außenseitig und/oder innenseitig von mindestens einer Polymerschicht (5b) bedeckt ist.

8. Transportband (1) nach Anspruch 7, **dadurch gekennzeichnet, dass** die mindestens eine Polymerschicht (5b) außenseitig oder innenseitig bereichsweise derartig abgetragen ist, dass sich eine um das Transportband (1) umlaufende Stufe (5c) ausbildet, wobei das Flächengebilde (4) um das Transportband (1) umlaufend randseitig auf die Stufe (5c) aufgelegt oder eingelegt ist,
wobei die in dem jeweiligen Zugbereich (B) um das Transportband (1) umlaufende genähte Verbindung (20) im Bereich der Stufe (5c) verläuft, um den separaten Zugträger (5) an das Flächengebilde (4) anzufügen.

9. Transportband (1) nach Anspruch 7 oder 8, **dadurch gekennzeichnet, dass** die Polymerschicht (7) des Flächengebildes (4) außenseitig oder innenseitig derartig abgetragen ist, dass
-- ein Abstand zwischen der mindestens einen Verstärkungseinlage (5a) des separaten Zugträgers (5) und der mindestens einen Verstärkungseinlage (6) des Flächengebildes (4), und/oder
-- ein Überstand (9) zwischen dem Flächengebilde (4) und dem separaten Zugträger (5) minimiert ist, insbesondere weniger als 4 mm beträgt.

10. Transportband (1) nach einem der vorhergehenden Ansprüche,
**dadurch gekennzeichnet, dass** das Transportband (1) ferner mindestens eine Keilleiste (10) aufweist, wobei die mindestens eine Keilleiste (10) an einer Innenseite (BI) des jeweiligen Zugbereiches (B) um das Transportband (1) umläuft, zum Führen des Transportbandes (1) auf einer Antriebsrolle (2) und/oder einer Umlenkrolle (3).

11. Transportband (1) nach Anspruch 10, **dadurch gekennzeichnet, dass** die mindestens eine Keilleiste (10) durch die in dem jeweiligen Zugbereich (B) um das Transportband (1) umlaufende genähte Verbindung (20) an die Innenseite (BI) des jeweiligen Zugbereiches (B) angefügt ist, wobei
- die genähte Verbindung (20) entlang einer Längsmittelachse (10L) der jeweiligen Keilleiste (10) verläuft, vorzugsweise durch eine Nut (10a), die in die jeweilige Keilleiste (10) der Innenseite (BI) des jeweiligen Zugbereichs (B) gegenüberliegend eingebracht ist, und/oder
- die genähte Verbindung (20) durch einen Fußbereich (10b) der jeweiligen Keilleiste (10) verläuft, wobei die jeweilige Keilleiste (10) in dem Fußbereich (10b), der der Innenseite (BI) des jeweiligen Zugbereichs (B) zugewandt ist, vorzugsweise eine Verstärkungseinlage (10c) aufweist, durch die auch die genähte Verbindung (20) verläuft.

12. Transportband (1) nach einem der vorhergehenden Ansprüche,
**dadurch gekennzeichnet, dass** die mindestens eine Mitnehmerleiste (12) durch einen entlang der Mitnehmerleiste (12) verlaufenden Stab (12b) verstärkt ist, vorzugsweise einen Stab (12b) aus glasfaserverstärktem Kunststoff oder aus Metall.

13. Transportband (1) nach einem der vorhergehenden Ansprüche,
**dadurch gekennzeichnet, dass** die mindestens eine Mitnehmerleiste (12) einen in die Querrichtung (Q) verlaufenden Mitnehmerkörper (12a) aufweist, wobei die mindestens eine genähte Verbindung (20) zum Anfügen der jeweiligen Mitnehmerleiste (12) an das Flächengebilde (4) in Querrichtung (Q)
-- durch den Mitnehmerkörper (12a) verläuft, insbesondere durch eine Längsmittelachse (12aL) des Mitnehmerkörpers (12a), und/oder
-- durch mindestens einen an der Außenseite (4a) des Flächengebildes (4) anliegenden Fuß (12c) verläuft, wobei der Mitnehmerkörper (12a) in Förderrichtung (F) in den mindestens einen Fuß (12c) übergeht.

14. Transportband (1) nach Anspruch 13, **dadurch gekennzeichnet, dass** der Mitnehmerkörper (12a) und/oder der mindestens eine Fuß (12c) durch eine Verstärkungseinlage (12e) verstärkt ist, durch die auch die in Querrichtung (Q) ausgebildete genähte Verbindung (20) verläuft, wobei die Verstärkungseinlage (12e) bei Vorhandensein eines entlang der Mitnehmerleiste (12) verlaufenden Stabes (12b) oberhalb oder unterhalb des Stabes (12b) verläuft.

15. Transportband (1) nach einem der vorhergehenden Ansprüche, **dadurch gekennzeichnet, dass** die jeweilige genähte Verbindung (20) durch einen Faden (21, 23, 25, 27) ausgebildet ist, der in mehreren Stichen (S)
-- den mindestens einen Zugbereich (B) in die Förderrichtung (F) durchstößt, und/oder
-- die mindestens eine Mitnehmerleiste (12) und das jeweilige Flächengebilde (4) in die Querrichtung (Q) durchstößt,
so dass sich eine in die Förderrichtung (F) und/oder in die Querrichtung (Q) verlaufende Naht (22, 24, 26, 28) ausbildet.
